# DEMANDE DE BREVET EUROPEEN

(11) **EP 0 948 923 A1**
(43) Date de publication de la demande: **13.10.1999**
(21) Numéro de dépôt: 99470012.8
(22) Date de dépôt: 09.04.1999
(51) Int. Cl.: A47J 17/06

(54) **Ustensile ménager pour ébouter les haricots verts**

(30) Priorité: 09.04.1998 FR 9804771
(71) Demandeur: Albi, Maud, 54000 Nancy (FR)
(72) Inventeur: Albi, Maud, 54000 Nancy (FR)

(57) **Abrégé**

La présente invention concerne un dispositif d'éboutage des haricots verts, comprenant un boîtier avec un couteau et une méthode. Le boîtier de forme cylindrique ovalisé(1)réduit de moitié par un méplat(2) comporte à ses deux extrémités une fente frontale d'introduction du couteau(3)(4) dans l'axe des fentes un orifice(5) est crée dans l'épaisseur du méplat pour loger la lame, et deux couvercles-socles(8)(9) d'introduction des haricots et d'évacuation des déchets ferment le boîtier. Le couteau (16) coupe et forme avec les couvercles-socles un réservoir à déchets. La méthode consiste à utiliser le boîtier à la verticale, de telle sorte à positionner les extrémités des haricots vers le bas du boîtier, à introduire le couteau dans la fente inférieure pour couper la première extrémité, ouvrir le socle inférieur pour évacuer les déchets, retourner le boîtier sur lui-même, retirer le couteau et le réintroduire dans la fente inférieure pour procéder à l'éboutage de la deuxième extrémité.

L'invention présente des variantes du boîtier.

Dispositif, à usage ménager, permettant l'éboutage des haricots verts par quantité.

## Description

La présente invention concerne un dispositif d'éboutage des haricots verts et une méthode, à usage ménager et des restaurateurs.

Habituellement l'éboutage des haricots verts se fait manuellement légume par légume, l'éboutage des deux extrémités et la quantité d'haricots verts nécessaires à la préparation culinaire du légume rend l'opération fastidieuse et longue. Selon l'invention le dispositif permet l'éboutage des haricots verts par quantité, d'où une importante économie de temps tout en laissant un minimum de déchets, comparables à l'éboutage familial.

Le dispositif est caractérisé en ce qu'il est constitué d'un boîtier et d'un couteau, ledit boîtier de forme cylindrique ovalisé (1) réduit de moitié par un méplat (2) comporte à ses deux extrémités sur la face frontale arrondie une fente d'introduction du couteau (3) (4) et dans l'axe des fentes, un orifice (5) est créé dans l'épaisseur du méplat pour loger la lame, et protéger la paroi du boîtier. La hauteur du positionnement des fentes frontales (6)(7) et l'épaisseur du couteau déterminent la longueur éboutée pour chaque extrémité des haricots, la lame étant fixée à la limite supérieure du couteau, et le boîtier utilisé à la verticale. Deux couvercles-socles (8)(9) d'introduction des haricots et d'évacuation des déchets ferment le boîtier; lesdits couvercles-socles présentent une saillie (10)(11) de la face interne, laquelle s'emboîte dans une feuillure (12)(13) réalisée dans la paroi du boîtier; et une encoche des couvercles-socles (14)(15) ou indifféremment un rebord diamétralement opposé au point de fixation sur le boîtier facilite l'ouverture.

Dans le prolongement inférieur et supérieur des fentes frontales la paroi du boîtier sur sa face interne présente avantageusement une saillie créant un rail pour guider le couteau.

Le couteau (16) de forme sensiblement identique à une coupe transversale du boîtier, augmenté en longueur et largeur de l'épaisseur de la paroi du boîtier, sur sa partie arrondie, pour servir de butée au couteau, de telle sorte à ne laisser pénétrer que la lame dans l'orifice et protéger le boîtier, lequel couteau est muni d'une poignée (17) fixée sur l'arrondi du corps du couteau, diamétralemnt opposée à la lame (18) ladite poignée allongée, est munie à sa base d'un système fléxible, lequel système permet le blocage du couteau et son maintien dans le boîtier au cours des opérations d'éboutage. La lame est de longueur légèrement inférieure à celle du couteau et de largeur inférieure à celle de la profondeur de l'orifice.

Le corps du couteau est d'une épaisseur très légèrement inférieure à l'ouverture des fentes frontales pour permettre son introduction dans le boîtier.

Par mesure de sécurité pour l'utilisateur les fentes frontales peuvent être renforcées à leur extrémité latérale par un système de protection et la face tranchante du couteau après usage glissée dans un cache.

Selon la méthode, indissociable du dispositif, le boîtier est utilisé à la verticale, afin de positionner les extrémités des légumes vers le bas du boîtier. Le contenu du boîtier représente une poignée d'haricots verts, ce qui permet le remplissage en une seule fois. Le couteau introduit dans la fente inférieure va couper les extrémités des haricots verts, et les séparer des déchets en créant avec le couvercle-socle en position inférieure un compartiment à déchets. La poignée est mise en position de blocage, le couvercle-socle est ouvert pour évacuer les déchets et refermé, le boîtier est retourné sur lui-même de telle sorte à ramener les extrémités non éboutées vers le bas et les mettre en position d'éboutage. Le couteau est retiré de la fente supérieure est réintroduit dans la fente inférieure pour ébouter la deuxième extrémité des haricots. Après évacuation des déchets comme décrit précédemment l'opération d'éboutage se termine par le retrait du couteau, libérant les haricots éboutés aux deux extrémités. Selon un mode de réalisation préféré le boîtier est réalisé en matière synthétique : polymère, carbonne ou autres donnant au boîtier une face interne d'aspect lisse pour faciliter le glissement des haricots. De préférence le cylindre ovalisé a une hauteur d'environ 15 cm, réduit de moitié par le méplat à 6,5 cm; la base de l'arrondi du boîtier opposée à la longueur du méplat est de 6 cm, la valeur des côtés du rectangle est de 4 cm, l'épaisseur de la paroi du boîtier est de 0, 5 cm et celle du méplat de 1 cm. De préférence le positionnement des fentes est situé à 1 cm à partir des extrémités du boîtier, la longueur d'ouverture des fentes frontales correspond à l'arrondi du boîtier, et la hauteur de l'ouverture est de 0,6 cm,très légèrement supérieure à celle de l'épaisseur du couteau.

Le dispositif comprend des modes de réalisation particulier du boîtier :
- Le boîtier renferme des cylindres, de préférence au nombre de 3 à 5, d'un diamètre de 5, 5 cm, soudés à un socle supérieur et inférieur de forme identique à une coupe transversale du boîtier, les socles prédécoupés au nombre de cylindres choisis, l'ensemble rendu solidaire pour former un bloc dont la hauteur est la même que celle comprise entre les deux fentes frontales du boîtier, l'ensemble du bloc cylindres(1) est fixé dans le boîtier(2) laissant l'ouverture d'introduction du couteau libre de toutes obtructions. Avantageusement le bloc cylindre peut être fixé au méplat sur une glissière(3) commandée de l'extérieur, permettant de ramener le bloc cylindres au ras bord des extrémités du boîtier pour faciliter le remplissage des cylindres.

Selon un mode de réalisation particulier, pour une quantité d'éboutage plus intensif, le boîtier est de forme cubique(1) ce qui permet d'augmenter le nombre de cylindres.

Le couteau prend une forme correspondante à une coupe transversale du boîtier(2)

Le dispositif peut être robotisé.

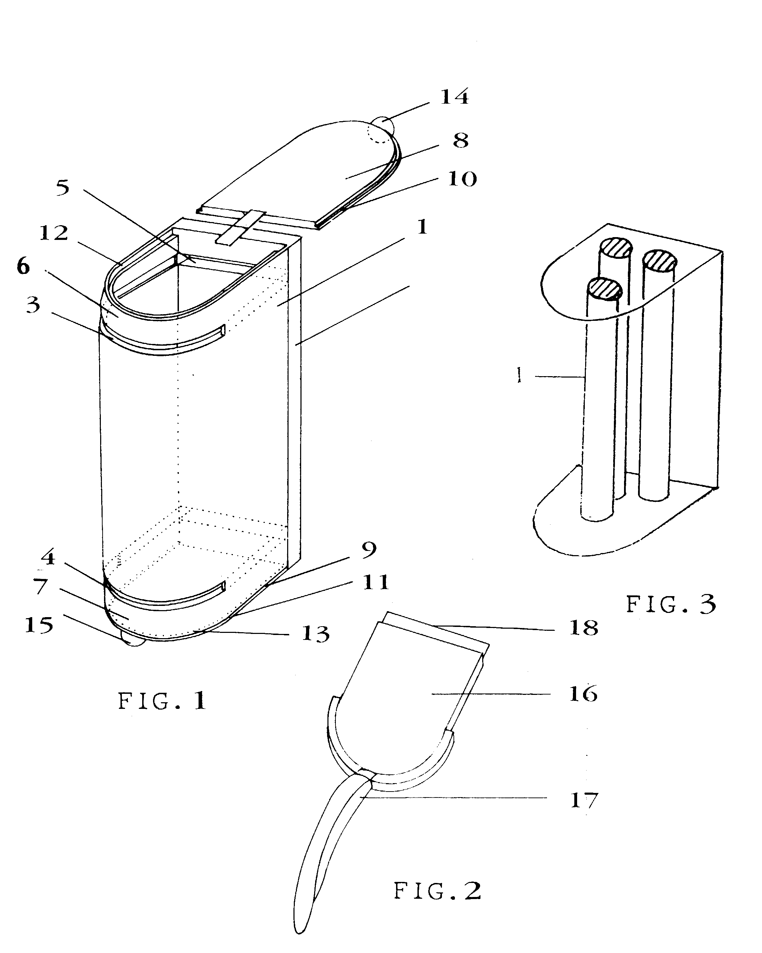

## Revendications

1. Dispositif d'éboutage des haricots verts caractérisé en ce qu'il comprend un boîtier de forme cylindrique ovalisé(1) réduit de moitié par un méplat(2) comprenant deux fentes frontales(3)(4) d'introduction du couteau; dans le même axe des fentes un orifice(5) est crée dans l'épaisseur du méplat pour loger la lame et deux couvercles-socles(8)(9) d'introduction des légumes et d'évacuation des déchets ferment le boîtier.

2. Dispositif d'éboutage des haricots verts selon la revendication 1, caractérisé en ce que dans le prolongement des fentes frontales la face interne supérieure et inférieure du boîtier présente une saillie créant un rail.

3. Dispositif d'éboutage des haricots verts selon les revendications de 1 à 2 caractérisé en ce que la longueur d'ouverture des fentes frontales correspond à la longueur de l'arrondi du boiîtier.

4. Dispositif d'éboutage des haricots verts selon les revendications de 1 à 3 caractérisé en ce que la face interne des couvercles-socles présente une saillie(10)(11) laquelle s'emboîte dans une feuillure(12)(13) réalisée dans la paroi du boîtier, et une encoche(14)(15) ou indifféremment un rebord des couvercles-socles facilite l'ouverture.

5. Dispositif d'éboutage des haricots verts selon les revendications de 1 à 4 caractérisé en ce que le couteau (16) de forme sensiblement identique à une coupe transversale du boîtier, augmenté à sa partie arrondie de l'épaisseur de la paroi du boîtier, pour servir de butée au couteau et, ne laisser pénétrer que la lame dans l'orifice, lequel couteau est muni d'une poignée(17)fixée sur la face arrondie, opposée à la lame(18)laquelle lame a une longueur inférieure à celle du couteau.

6. Dispositif d'éboutage des haricots verts selon la revendication 5 caractérisé en ce que la poignée allongée, est munie à sa base d'un sytème fléxible avec moyen de mise en blocage, pour permettre le maintien du couteau dans le boîtier au cours des opérations d'éboutage.

7. Dispositif d'éboutage des haricots verts selon les revendications de 1 à 6 caractérisé en ce que la hauteur du positionnement des fentes, située de préférence à 1,cm, à partir des extrémités du boîtier, déterminent avec le couteau la longueur éboutée pour chaque extrémité des haricots; la lame étant fixée à la limite supérieure du couteau.

8. Dispositif d'éboutage des haricots verts selon les revendications de 1 à 7 caractérisé en ce que le boîtier est réalisé en matière synthétique, facilitant le glissement des haricots.

9. Procédé d'éboutage des haricots verts utilisant le dispositif selon une des revendications de 1 à 8 caractérisé en ce que le boîtier est utilisé à la verticale, de telle sorte à positionner les extrémités des haricots vers le bas du boîtier, à introduire le couteau dans la fente inférieure pour couper les premières extrémités, à mettre la poignée en position de blocage, vider le compartiment à déchets, retourner le boîtier sur lui-même, retirer le couteau, le réintroduire dans la fente inférieure pour ébouter la deuxième extrémité des haricots, comme décrit précédemment.

10. Dispositif d'éboutage des haricots verts selon une des revendications de 1 à 9 caractérisé en ce que le boîtier présente des variantes, comportant un bloc cylindres, lequel bloc a une hauteur identique, à celle comprise entre la hauteur des deux fentes frontales, laissant la fente d'introduction du couteau libre de toutes obtructions; lesdits boîtiers permettent un éboutage en plus grande quantité des haricots.
